# EUROPEAN PATENT SPECIFICATION

(11) **EP 2 439 942 B1**
(45) Date of publication and mention of the grant of the patent: **22.04.2015**
(21) Application number: 09845412.7
(22) Date of filing: 12.08.2009
(51) Int. Cl.: H04N 5/775, H04N 5/765, G06F 3/00, G06F 13/00, H04N 21/462, H04N 21/41

(54) **TV SIGNAL SWITCHING BOX AND CONTROLLING METHOD THEREOF**
FERNSEHSIGNALSCHALTKASTEN UND STEUERVERFAHREN DAFÜR
BOÎTIER DE COMMUTATION DE SIGNAL TV ET SON PROCÉDÉ DE COMMANDE

(30) Priority: 01.06.2009 CN 200910015754
(43) Date of publication of application: 11.04.2012
(73) Proprietor: Haier Group Corporation, Qingdao Shandong 266101 (CN); Qingdao Haier Electronics Co., Ltd., Shandong 266101 (CN)
(72) Inventor: LIU, Chao, Qingdao Shandong 266101 (CN); CHEN, Yilong, Qingdao Shandong 266101 (CN); ZHANG, Jihu, Qingdao Shandong 266101 (CN); YU, Zida, Qingdao Shandong 266101 (CN); HU, Xijia, Qingdao Shandong 266101 (CN); CHEN, Liang, Qingdao Shandong 266101 (CN)
(74) Representative: Wächter, Jochen
(86) International application number: PCT/CN2009/073216
(87) International publication number: WO 2010/139132

(56) References cited:
- EP-A2- 0 705 033
- EP-A2- 1 359 585
- CN-A- 1 127 452
- CN-A- 101 175 188
- CN-A- 101 394 526
- CN-Y- 200 953 620
- US-A- 4 862 290
- US-A1- 2005 105 007
- US-A1- 2007 220 150
- US-B1- 6 314 326

## Description

This application claims priority to Chinese Patent Application No. 200910015754.3, filed on June 1, 2009, entitled "A Signal Switching Box in a TV Set and a Method for Controlling the Same".

### Field of the Invention

The present invention relates to a signal switching box in a TV set and a method for controlling the same, and particularly, to a signal switching box in a TV set capable of being connected with a plurality of signal sources simultaneously and a method for controlling the same.

### Background of the Invention

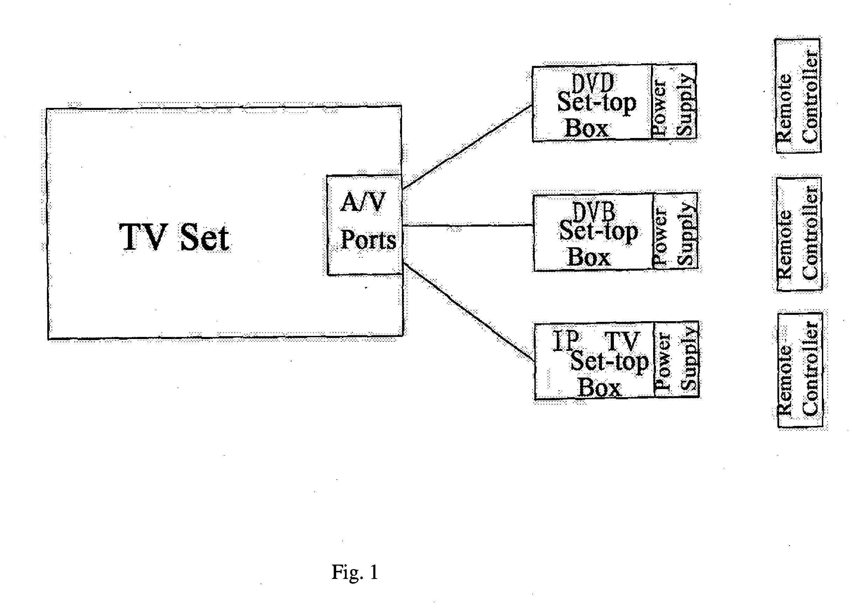

Currently, TV sets are widely used for receiving analog signals, during the generation of digital TV, most of the TV sets, after converting a digital signal to an analog signal through the external device such as a set-top box, a DVD (Digital Video Disc), a DVB (Digital Video Broadcasting, a type of international digital TV open standards), output the analog signal to the TV set to be displayed. For instance, after receiving a digital signal, the set-top box converts it to an interface signal such as A/V (Audio/Video, standard video signal) interface signal or Y, U, V analog component video, etc, and outputs the converted analog signal with low display resolution to the TV set. As show in Fig. 1, the TV set connects to a DVD set-top box, a DVB set-top box and an IP TV set-top box, respectively, through A/V ports. In this structure, however, each set-top box needs an independent power supply to supply power thereto; moreover, each set-top box needs an independent remote controller to control the same, while the signal output from such set-top boxes to the TV set is still an analog image with a quite low resolution.

The above DVD, DVB and IP TV set-top boxes are connected with a core circuit of the TV set through different interface circuits. Various types of interfaces neither have a unified standard nor have functions for extending and upgrading. If it needs to add a new digital program receiving source, a whole set of new set-top box device should be bought, and this will lead to redundancy of resources in these devices, for example, each machine needs a power supply , each apparatus needs an independent remote controller , and different product has different number of output terminals in different colors. While these external wires take a lot of space, the connection of them is complex, making the installation and usage inconvenient to the users. In addition, joints of the wires have to be connected iteratively as different devices are used. Such TV set function expansion not only leads to a relatively high comprehensive use cost of the user but also makes it inconvenient to store the plurality of remote controllers. Moreover, outputs of the devices are not standard, and interfaces and performances of similar products are quite different.

With the development of the digital technique, at present, in the devices such as DVD, DVB and IP TV set-top boxes, all the processes such as read-out and decompression of audio and video signals have been completely digitalized with standard specifications. The digital audio and video standard interface HDMI for the digital TV has been globally popularized, thus, there is no longer a need to transmit the analog signal between these devices and the digital TV, while it is a general trend to directly transmit standard audio and video digital signals.

In order to overcome the above-mentioned shortcomings of the set-top boxes and follow the trend of continuous development of the digital TV technique, it is necessary to provide a signal switching box conforming to the digital TV standard, capable of being simultaneously connected with a plurality of signal sources, uniform in power supply and control, wide in adaptation, economic in resources and convenient to upgrade.

US 2005/0105007 disclose a media centre comprising an I/O controller connecting an IR controller with a graphic controller so that a signal source is directly addressable by a user's remote control. However, the expansion cards are not configured to receive an IR instruction.

US 4 862 290 refers to a power feeding and input signal switching control for a video tape recorder which is integrated in a TV body.

EP 0 705 033 A2 refers to a controlling method of an audio video system without disclosing a signal source in the form of an expansion card.

US 2007/0220150 refers to a source switching method for a multimedia interface having an IR interface at the switching box but not at the signal sources.

CN 101175188 A refers to playing system for playing signals from multiple signal sources being power supplied by a TV set.

### Summary of the Invention

Viewing the shortcomings in the prior art, the technical problem to be solved by the present invention is to provide a signal switching box and a method for controlling the same. This signal source is capable of being connected with a plurality of signal sources simultaneously, and supplying power thereto and controlling the same uniformly.

In order to solve the above technical problems, a technical solution in the present invention is accomplished as follow:
a TV set signal switching box connected between a TV set and signal sources to enable the signal sources to exchange media signals with the TV set, wherein the signal switching box includes a first interface and a second interface, the first interface is electrically connected and interactively communicates with the TV set, and the second interface is electrically connected with a plurality of signal sources and outputs a power supply signal and a control signal to the signal sources.

Further, the signal sources are removably connected with the TV set signal switching box.

The plurality of signal sources have the same interfaces that are plugged in the TV set signal switching box.

The signal source interface is one end of a golden finger connector.

And further, the TV set signal switching box is provided separately from the TV set and is connected with the TV set through a signal transmitting device for interactive communication.

The TV set includes a TV set processing unit, and the signal transmitting device is connected with the TV set processing unit.

And further, the TV set signal switching box also includes a processing unit and an audio and video processing unit that is connected with the processing unit and controlled by the processing unit.

The audio and video processing unit controls the signal sources to carry out an audio and video signal transmission with the TV set.

The processing unit is connected with the signal sources and transmits a detection signal, a control signal and a communication signal to the signal sources.

A technical solution of the present invention further may be accomplished as follow:
a method for controlling a TV set signal switching box, the TV set signal switching box including a first interface, a second interface and a processing unit, the first interface being electrically connected and interactively communicating with the TV set, the second interface being electrically connected with a plurality of signal sources and outputting a power supply signal and a control signal, and the processing unit controlling signal transmission of the first interface and the second interface, and the method for controlling includes the following steps:
   the TV set supplying a power to the processing unit, the processing unit being enabled;
   inputting the processing unit power supply signal, control power supply signal to the signal sources, and detecting the signal source device;
   the processing unit interactively communicating with the TV set, determining a signal source that needs to operate and enabling the signal source to operate;
   the signal source outputting an audio and video signal to the TV set;
   the processing unit interactively communicating with the TV set, determining a signal source that needs to operate and enabling the signal source to operate;
   the signal source outputting an audio and video signal to the TV set.

Further, the signal switching box also includes an audio and video processing unit, after the processing unit interactively communicates with the TV set and the signal source is enabled to operate, the control signal switches the audio and video processing unit, and outputs the signal source audio and video signal to the TV set.

Compared with the prior art, the TV set signal switching box provided in the present invention gives sufficient consideration to the diversity of the digital signal sources, optimal display effects of the digital TV and future expandability of the system, and realizes convenient product connection and flexible expansion using a modularized design, i.e. cooperation of modularization of the TV function expansion assembly with standardized design of the golden finger connector, thus, not only a display standard of a digital TV source can be wholly realized, but also different types of digital TV sources such as a digital broadcast source, a digital playing source and a digital network source can be received, a transition from an analog TV to a digital TV can be accomplished at current stage, and functions such as recordable time retrieving, learning and entertainment, and network downloading can be upgraded or new functions be added, thus getting resources saved, control easy, adaptation scope wide and upgrading convenient.

### Brief Description of the Drawings

Fig. 1 is a schematic diagram of receiving means of a traditional TV set;
Fig. 2 is a block diagram of a system principle of signal switching according to an preferred embodiment provided in the present invention;
Fig. 3 is a schematic diagram of a circuit connecting a signal switching box with signal sources according to an preferred embodiment provided in the present invention;
Fig. 4 is a block diagram of a circuit of a signal source function expansion module according to an preferred embodiment provided in the present invention;
Fig. 5 is a schematic diagram in which signal sources carrying out signal transmission with the TV set by a signal switching box according to an preferred embodiment provided in the present invention; and
Fig. 6 is a flow chart of a method for controlling a signal switching box according to a preferred embodiment provided in the present invention.

### Detailed Description of Embodiments

Now, the exemplary embodiments of the present invention will be described in detail with reference to the drawings. In these figures, like reference number represents like or similar element even if in different figures.

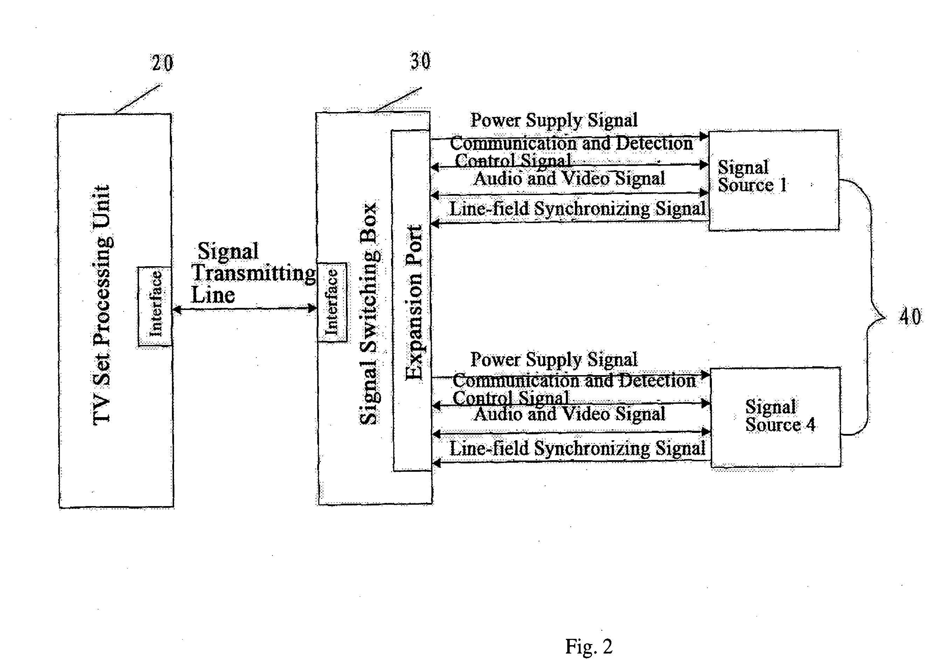

The referred Fig. 2 is a block diagram of a system principle of signal switching according to an preferred embodiment of the present invention. A signal switching box 30 in the present invention is electrically connected between a TV set processing unit 20 and signal sources 40. The signal switching box 30 is provided therein with an interface configured to be connected to the TV set processing unit 20 and an expansion port configured to be connected to the signal sources 40. The interface is connected to a matched processing unit interface on the TV set processing unit 20 through a signal transmitting line and completes the signal transmission between the TV set processing unit 20 and the signal switching box 30 through this signal transmitting line, wherein the signals transmitted through the signal transmitting line may include control signals, audio and video signals, communication signals, power supply signals, etc., and the signal transmitting line may be an HDMI (High Definition Multimedia Interface) transmitting line. Of course, the signal transmitting line may also be replaced by a radio network. In addition, the expansion port on the signal switching box 30 may be connected to the signal sources 40 and may transmit a power supply signal, a communication and detection control signal, an audio and video signal, a line-field synchronizing signal, etc. through an electrical connection between this expansion port and the signal sources 40.

It is worth of mentioning that in an preferred embodiment of the present invention, the signal sources 40 may be in a form of expansion card. The expansion card may be an exposed circuit board provided with a user operating interface, i.e. a pluggable external signal interface, on one side and a socket terminal on the other side. This socket terminal is corresponding to a socket port disposed on the expansion port of the signal switching box 30 to enable the socket port to be plugged in or pulled out from the socket terminal on the signal sources 40 so as to plug the signal sources 40 in or remove the same from the signal switching box 30. In another embodiment of the present invention, the positions between the socket terminal and the socket notch may be exchanged, i.e. the socket notch is provided on the signal sources 40, while the socket terminal is provided in the expansion port of the signal switching box 30 and electrically connected with the signal switching box 30. It is appreciated to the person skilled in the art that there are other forms of the signal sources 40, such as expansion box, on the basis of the teaching of the present invention.

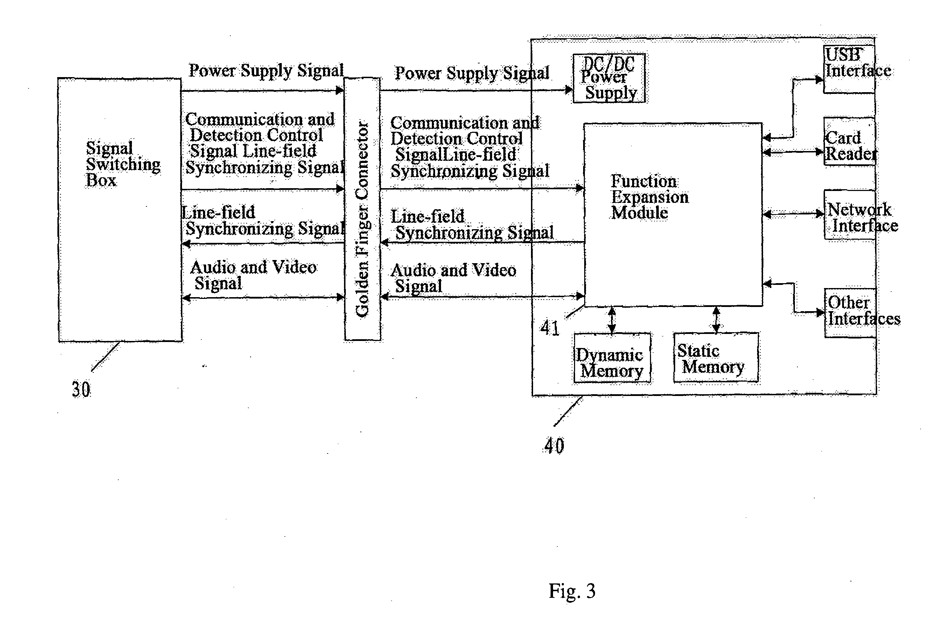

As shown in Fig. 3,as full consideration is given to the diversity of the digital signal sources, optimal display of the digital TV and capabilities for extending the system, the signal source 40 provided in the present invention is designed into modules, that is, the socket terminals and socket notches are made by means of the golden finger connector. The convenient connection and flexible extension for the signal source 40 are realized through a combination of modularization of the signal source with standardized design of the golden finger connector. Thus, not only can a display standard of a digital TV source be realized, but also different types of digital TV sources such as a digital broadcast source, a digital playing source and a digital network source can be received. In addition, a transition from an analog TV to a digital TV can be accomplished, and functions, such as recordable time retrieving, learning and entertaining, and network download, etc, can be upgraded or added. The consumer just needs to choose function modules of the signal source 40 complying with the standardized interfaces, so that a combination of the signal source 40 having different function modules and the TV set 30 is provided with a low and flexible cost, and an individual assembly is also supported. As the "modularized" configuration is flexible, the consumption sectors for the product are enlarged, new techniques and new products may be performed by adding corresponding developed modules into a system. With respect to the signal sources 40 having different functions, the corresponding golden finger connectors have the socket terminals and socket notches of a uniform specification. The specification herein not only means that the socket terminals and the socket notches have the same regulation of arranging electrical signals, but also means that they have a uniform dimension specification in physical sizes.

Signals transmitted by the golden finger connector in the present invention at least include power supply signals, communication and control signals and audio/video signals. The socket terminal is provided on the signal sources 40 and may be a golden finger socket member made of a printed circuit board. When the socket terminal is plugged in the socket notch, conductive parts of both come to contact with each other to form an electrical connection, enabling the communication and control signal, audio/video signal and power supply signal to be transmitted to the signal sources 40. The conductive part of the socket terminal has a surface that is gold-plated and is characterized by good conductivity, wear resistance and antioxidation. As the signals transmitted by the golden finger connector include the power supply signal, the signal switching box 30 may provide a power supply to the signal sources 40 through the power supply signal; moreover, a control information connecting mechanism is established between the signal sources 40 and the signal switching box 30 through the communication and control signal for coordinate and uniform work so as to transmit the audio/video signal between the signal sources 40 and the signal switching box 30. This configuration enables a plurality of signal sources 40 to be supplied with a power with one power supply and controlled with one remote controller, effectively saving energy, facilitating operation and control, and satisfying the user's requirement.

Particularly, the signal sources 40 may expand functions of the TV set, and carry out data communication with the TV set processing unit through the signal switching box 30. The signal sources 40 include module circuits having varied functions and realizing different functions, for instance, recordable time-retrieving module circuit that may play a high definition video and may record a video, learning and entertainment module circuit that may be used for learning English and playing games, digital TV module circuit that may replace the set-top box to play a digital signal, network downloading module circuit that may be used for downloading films from the web, etc. The TV set supporting the expanded signal sources 40 may realize different functions by changing the signal sources 40 having different functions.

The signal sources 40 include a function expansion module 41, external interfaces, memories and a DC/DC power supply provided on a printed circuit board, particularly DC (Direct Current, direct level).

The function expansion module 41 which is a core part of the signal sources 40 includes a processor and various function units. It receives the communication and control signal and audio/video signal input by the socket terminal, performs operations such as executing, processing and calculating to the above signals, and returns the processing result or data back to the TV set processing unit through the signal switching box 30; or it receives a data signal input by an external interface, performs operations such as executing, processing and calculating to the above signal, and then returns the processing result or data back to an external device or external network connected with the external interface.

The external interfaces include Universal Serial Bus (USB) interfaces, a card reader, a network interface and other interfaces. The USB interface is configured to be connected with a USB memory or other serial communication devices using the USB interface. The card reader may read a plurality of memory cards of different types. The network interface may be connected with a plurality of types of external networks such as Ethernet, telephone network, cable network, optic fiber network and may have an interface in multiple forms such as RJ-45, RJ-11, parallel port (LPT port), SC port (optic fiber port) and coaxial port. The other interfaces are of a plurality of types such as IDE (Integrated Device Electronics) interface connected with a hard disk or an optical driver, ATA/SATA (Advanced Technology Attachment/Serial Advanced Technology Attachment, parallel/serial hardware driver) interface, a mouse interface, a keyboard interface, a game handle interface or a microphone interface.

As data storing units of the function expansion module 41, the memories may store audio/video signal data, and communication and control signal data, and include a dynamic memory and a static memory. The static memory may be, but not limited to, a Flash, and the dynamic memory may be, but not limited to, a Dynamic Random Access Memory (DRAM) such as DDR (Double Data Rate) and SDR (Memory Data Register).

The direct current-to-direct current (DC/DC) power supply receives a power supply signal, e.g. a 12V power supply signal, input from the socket terminal, and as a switching power supply, it may perform a boost/buck operation to the input power supply signal to convert it to a fixed voltage needed and outputs the same to the function expansion module 41, external interfaces and memories so as to supply an appropriate operating voltage to each part.

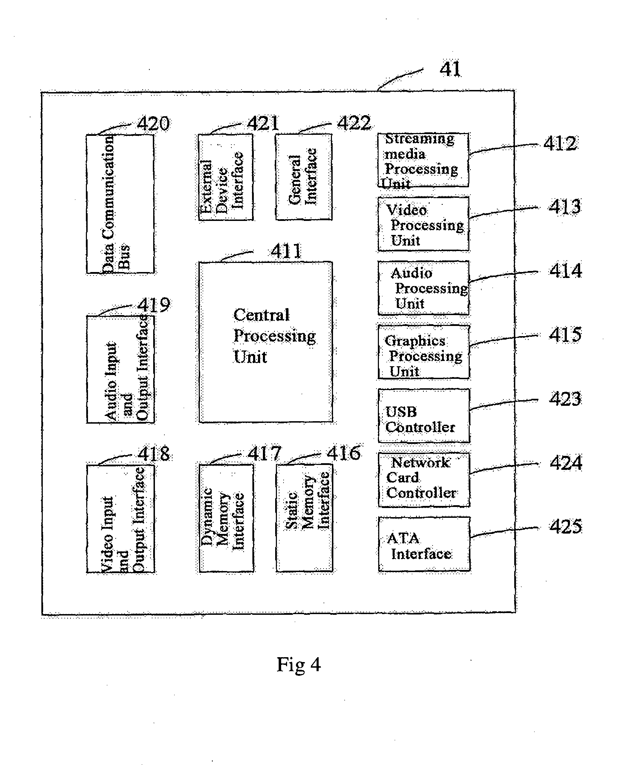

As shown in Fig. 4, the function expansion module 41 according to the present invention includes a plurality of function units that may be divided into two types, i.e., processing units and interface units. The processing units include a central processing unit 411, a streaming media processing unit 412, a video processing unit 413, an audio processing unit 414 and a graphics processing unit 415. The interface units include a static memory interface 416, a dynamic memory interface 417, a video input and output interface 418, an audio input and output interface 419, a data communication bus 420, an external device interface 421, a general interface 422, a USB controller 423, a network card controller 424 and an ATA interface 425.

The processing units are responsible for executing the received communication and instruction signal and processing the received audio/video signal. For instance, the streaming media processing unit 412 is responsible for processing the received streaming media data. The video processing unit 413 is responsible for processing a video signal. The audio processing unit 414 is responsible for processing an audio signal. The graphics processing unit 415 is responsible for producing a graphics program interface such as program menu or producing a user interface such as learning picture, entertaining picture or electronic game picture, etc. The central processing unit 411 is responsible for controlling all processing units and interface units, and receiving and executing the input communication and instruction signal.

The interface units are responsible for data communication and transmission internally, externally and between units. For instance, the static memory interface 416 is responsible for a read-write operation on the static memory. The dynamic memory interface 417 is responsible for a read-write operation on the dynamic memory. The video input and output interface 418 is responsible for input and output operations on the video signal. The audio input and output interface 419 is responsible for input and output operations on the audio signal. The data communication bus 420 is responsible for the operations on the communication and instruction signal and the data communication between the respective internal units. The external device interface 421 is responsible for communication and data transmission between the function expansion module 41 and the external device. The general interface 422 supports not only a common interrupting and inquiring low speed data transmission mode but also a DMA high speed data transmission mode, and supports various types of I/O ports, which may satisfy a plurality of application requirements. The USB controller 423 is responsible for reading an external USB data or performing a data writing on an external USB device. The network card controller 424 is responsible for communication and data transmission with the external network. And the ATA interface 425 is responsible for performing a read-write operation on devices such as card reader, hard disk and optical driver.

Standardization of the signal sources 40 according to the present invention may be adapted to a wider area and more manufacturers. Moreover, the function configuration is free and flexible, and the cost is relatively low when a standard modularized design on each function units or interfaces. The function units or interfaces may be combined as required in product designing, whereby a sufficient space is reserved for additional application of new functions, modules or interfaces in future, and every thing, no matter in aspects of interface specification or software upgrading, etc., is ready for joining future modules with the existing modules. The modules to be newly added in the future can be directly added as being the same interface specification and conforming to the unified protocol specification. In addition, the whole system software may be updated and upgraded in a plurality of manners such as an USB interface or a network interface.

Several application types of the expansion card according to the present invention will be described as follows.
1. Digital integrated signal source: a function expansion module of the digital integrated signal source includes a set-top box chip for receiving digital interactive TV program signal. External interfaces of the digital integrated expansion card include an RF (Radio Frequency) interface, a network interface and an HDMI interface. The cable digital high definition signal may be received using the digital integrated signal source without connecting to a set-top box.
2. High definition recordable signal source: a function expansion module of the high definition recordable signal source includes a video processing unit, an audio processing unit, a USB controller and an ATA interface for converting a TV program to a video file and store the same into a Flash chip. External interfaces of the high definition recordable signal source include a USB interface and an IDE/ATA/SATA interface, and may be connected to a USB memory or a mobile hard disk so as to store the video file. The high definition recordable signal source may further include a timer, and the user may record the TV program optionally in a video recording mode of instant recording or timing recording. In addition, the user may also download a high definition video file such as MPEG (Motion Picture Expert Group) or a TS stream from the web and play the same using the high definition recordable signal source.
3. Learning and entertaining signal source: a function expansion module of the learning and entertaining signal source includes a central processing unit and a graphics processing unit, the static memory stores programs such as poem recitation with pictures, English learning materials and electronic games, and an external interface includes a game console interface. The central processing unit and the graphics processing unit may execute the programs stored in the static memory according to the option of user(s), and plays an executing result, including graphics menu, audio signal and video signal, through the TV set.

It should be appreciated that the descriptions on the signal sources above intend to teach the person skilled in the art to fully understand the present invention. And the signal sources according to the present invention may not be limited to the above structures, while various types of new function units and interface units may be added to the signal sources. The person skilled in the art may also carry out a combined design of the function units and interface units of the signal sources as well as other function modules as required.

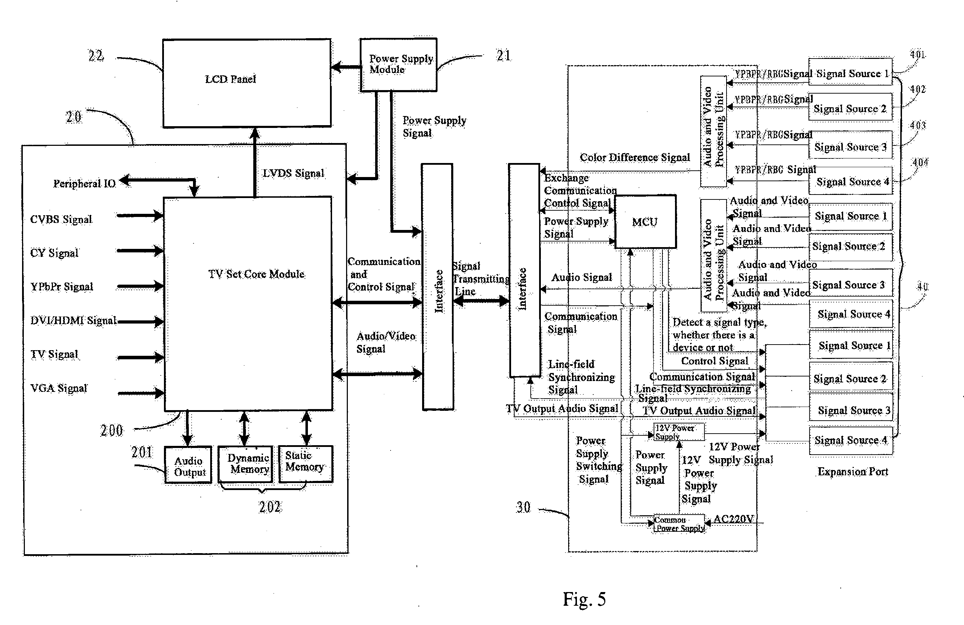

As shown in Fig. 5, a TV set connected to a signal switching box 30 according to the present invention includes a TV set processing unit 20, a power supply module 21 and an LCD (Liquid Crystal Display) panel 22, wherein the power supply module 21 is electrically connected to the TV set processing unit 20 and the LCD panel 22 so as to supply the operating voltage. And the power supply module 21 may also be integrated into the TV set processing unit 20.

The TV set processing unit 20, the main board of the TV set, is provided in the TV set and includes function modules such as a TV set core module 200, an audio output 201 and memories 202, etc.. The TV set core module 200 may receive audio/video signals in different formats through various types of external interfaces of the TV set. These signals, either analog or digital, may include the received Radio Frequency signal (RF), Composite Video Broadcast Signal (CVBS), luminance/chroma signal (Y/C), color difference signal (Y/Pb/Pr), VGA (Video Graphics Array) signal, DVI (Digital Visual Interface) signal, HDMI signal and various other existing audio/video signals. And after being processed, the audio/video signal is output to a display panel and sound equipment of the TV set.

The TV set processing unit 20 includes a plurality of function units such as a microprocessor, a graphics processor, a video processing unit, an audio processing unit, a demodulator, a decoder, a data communication bus, and an IO (Input/Output) interface, etc.. The TV set processing unit 20 may receive audio/video signals in different formats through various types of external interfaces of the TV set. These signals, either analog or digital, may include audio/video analog signals or digital signals such as CVBS signal, Y/C signal, Y/Pb/Pr signal, DVI signal, HDMI signal, TV signal and VGA signal, etc.. The TV set processing unit 20 is connected and communicates with external devices through peripheral IO interfaces. The communication thereof may be carried out in a plurality of manners such as General Purpose IO Interface (GPIO), Pulse Width Modulation (PWM), Universal Asynchronous Receiver/Transmitter (UART) and Infrared (IR). The TV set processing unit 20 processes the received signals in different formats, converts a video signal into an LVDS signal (low voltage differential signaling), and outputs the same to the LCD panel 22 to display an image. The audio signal is output to the audio output 201 for sound producing.

The audio output 201 is configured to convert an audio signal in a form of electrical signal to a sound signal in a form of air vibration, and it may be, but not limited to, a device such as trumpet and loudspeaker.

As data storing units of the TV set processing unit 20, the memories 202 may store the audio/video signal data, and communication and control signal data, and include a dynamic memory and a static memory. The static memory which is a fixedly allocated memory is generally configured to store a global variable or data, instruction, etc. before compilation, and it may be, but not limited to, a Flash. The dynamic memory which is a memory allocated according to needs is generally configured to store a formal parameter of a function, an automatic variable or data, instruction, etc. that are allocated in operation, and it may be, but not limited to, a Dynamic Random Access Memory (DRAM) such as DDR and SDR.

The signal switching box 30 includes an MCU (Microprocessor Control Unit), a common power supply, a 12V power supply, a first audio and video processing unit and a second audio and video processing unit. The MCU may interact the communication control signal with the TV set processing unit 20 through the interfaces of the TV set processing unit 20 and the signal switching box 30. Moreover, the TV set processing unit 20 may transmit a power supply signal to the MCU through interfaces of the signal switching box and the TV set processing unit 20 so as to supply power to the MCU. And of course, the MCU may also be supplied power by the common power supply. The MCU may also transmit control signals to the first video processing unit and the second audio and video processing unit so as to control the first video processing unit and the second audio and video processing unit to transmit a YPbPr/RGB signal and an audio and video signal to the TV set processing unit 20 through interfaces. In addition, the MCU may transmit power supply switching signals to the common power supply and the 12V power supply so as to control the common power supply to generate the 12V power supply and to transmit a 12V power supply signal to the signal sources 40 for supplying a power to the signal sources 40. And the MCU may transmit detection, control and communication signals to the signal sources 40 and detects whether a signal source 40 exists and the type of the existing signal source 40 through the detection signal The signal source 40 is controlled to operate by the control signal and the signal source required to operate is determined by the communication signal and the TV set processing unit 20.

In the preferred embodiment of the present invention, the signal sources include the first signal source 401, the second signal source 402, the third signal source 403 and the fourth signal source 404. Particularly, the first to fourth signal sources 401, 402, 403 and 404 are supplied with power by a 12V power supply signal of the 12V power supply provided on the signal switching box, wherein the 12V power supply may be supplied by the common power supply of common external AC 220V power supply after AC-DC and DC-DC.

After the first to fourth signal sources 401, 402, 403 and 404 obtain the 12V power supply signal and are electrified, the YPbPr/RGB signal may be input to the first audio and video processing unit, and the YPbPr/RGB signals are input to the TV set processing unit 20 through interfaces by means of the first audio and video processing unit. After the first to fourth signal sources 401, 402, 403 and 404 obtain the 12V power supply signal and are electrified, the audio and video signals may be input to the second audio and video processing unit, and the audio and video signals are input to the TV set processing unit 20 through interfaces by means of the second audio and video processing unit. In addition, the first to fourth signal sources 401, 402, 403 and 404 may further receive a communication signal and a TV output audio and video signal sent from the TV set processing unit 20 through interfaces and may transmit a line-field synchronizing signal to the TV set processing unit 20 through an interface.

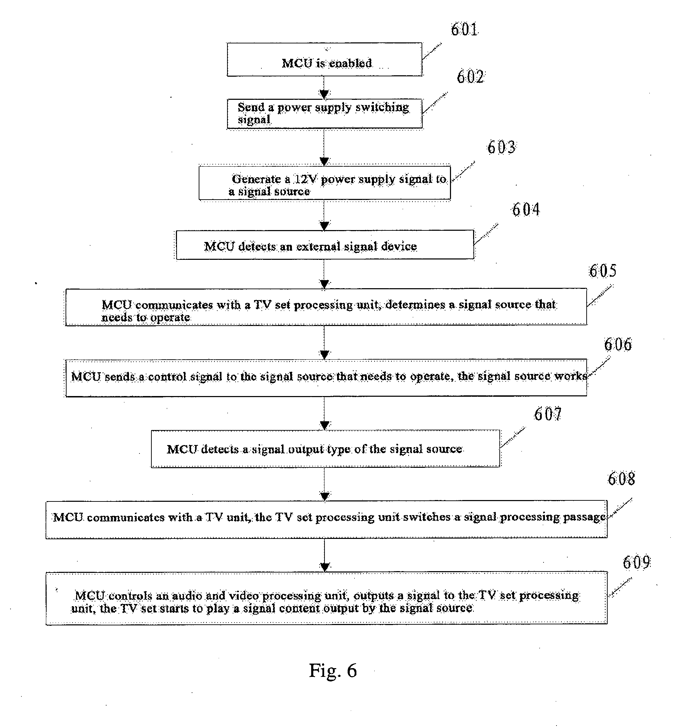

When the TV set performs an expansion by being connected to the signal sources 40 through the signal switching box 30, as can be known from the flow chart of a method for controlling the signal switching box in the preferred embodiment of the present invention as shown in Fig. 6:
601, firstly the signal switching box 30 is connected to the TV set processing unit 20 wirelessly or through interfaces and a signal transmitting line, at this moment, the TV set processing unit 20 or a common power supply may provide a power supply signal to an MCU in the signal switching box 30 to enable the MCU to be electrified and start to operate.
602, a signal source 40 is inserted in the signal switching box 30, when a socket terminal on the signal source 40 is inserted in a socket notch, the conductive parts of both contact with each other to form an electrical connection; thereafter, the MCU sends out a power supply switching signal.
603, after the MCU sends out the power supply switching signal, the common power supply and 12V power supply are turned on, and the 12V power supply immediately generates a 12V power supply signal to the signal source 40 to enable the signal source 40 to be electrified.
604, after the signal source 40 is electrified, the MCU may determine whether a signal source 40 exists by inputting a detection signal to the signal source 40.
605, if it is determined that there is the signal source 40, the MCU interacts a communication control signal with the TV set processing unit 20 and determines which signal source 40 needs to operate in the case that there are a plurality of signal sources 40.
606, the MCU sends a control signal to the signal source 40 that needs to operate and enables the signal source 40 to operate.
607, after enabling the signal source 40 to operate, the MCU detects a type of signal output of the signal source 40. In the preferred embodiment of the present invention, an identification signal output from an insertion detection circuit is corresponding to the function type of the signal source 40. This does not only indicate that the signal source 40 has been inserted in the signal switching box 30 and is electrically connected with the MCU, but also inform the MCU of the function type of the signal source 40, such as the digital integrated signal source, high definition recordable signal source or learning and entertaining signal source. For example, the identification signal may represent signal sources 40 of different function types by using a set of binary codes.
608, the signal source 40 exchanges the communication control signal with the TV set processing unit 20 interactively and controls the first audio and video processing unit and the second audio and video processing unit through content of the communication control signal.
609, YPbPr/RGB signals and audio and video signals input by the signal sources 40 to the first audio and video processing unit and the second audio and video processing unit are input to the TV set processing unit 20, and, after being processed by the processing units, contents of the signal sources 40 are played.

It is worth of mentioning that the signal source 40 outputs an audio/video type signal identification to a TV set core subsystem, and the audio/video type signal identification may represent, by a set of binary codes, the types of signals output by the external interfaces to the expansion card. These signals include RF signal, CVBS signal, Y/C signal, Y/Pb/Pr signal, VGA signal, DVI signal, HDMI signal and various other existing audio/video signals. The TV set processing unit 20, after receiving the identification signal, switches a corresponding display passage and outputs an audio/video content of the signal source 40. The TV set processing unit 20 and the signal source 40 carry out a mutual signal control and communication through the signal switching box 30 in a communication manner such as UART (Universal Asynchronous Receiver/Transmitter)/IIC/IR (Interrogator-Responder) communication signal, etc.

Thereafter, the user may use a remote controller to choose whether the TV set receives a program in a common TV receiving mode or a signal source mode. An infrared instruction sent by the remote controller, after being received and decoded by the TV set, may be firstly transmitted to the TV set processing unit 20. After the infrared instruction is processed by the TV set processing unit 20, a control instruction is sent. A communication control signal is interacted between the interface and the signal switching box 30 and transmitted to the signal source 40 through the golden finger connector for performing corresponding operation. Of course, as the signal source 40 has an external device interface 421 that may receive an IR instruction, the remote controller may also directly carry out a data communication with the signal source 40 so as to control an operation thereof. Therefore, it makes the operation much easier for the user to control the TV set, the signal switching box 30 and a plurality of signal sources 40 with one remote controller.

Though preferred embodiments of the present invention are disclosed for the sake of illustration, the person ordinarily skilled in the art should realize that, it is possible to make various improvements, additions and substitutions.

## Claims

1. A TV set signal switching box (30), connected between a TV set and signal sources (40) to enable the signal sources (40) to interact media signals with the TV set,
said switching box (30) comprises a first interface, a second interface and a processing unit (MCU),
said first interface is electrically connected to and interactively communicates with the TV set,
said second interface is electrically connected to a plurality of signal sources (40), supplies the signal sources (40) with power by outputting a power supply signal, and outputs a control signal to the signal sources (40), and
said processing unit (MCU) receives a power supply signal from the TVSet thus being enabled, inputs the processing unit power supply signal, controls the power supply signal to the signal sources (40) and detects the signal source device (40), interactively communicates with the TV set, determines a signal source (40) that needs to operate and enables the signal source (40) to operate, and the signal source (40) outputs an audio and video signal to the TV set,
wherein said signal sources (40) are in the form of expansion cards and are detachably connected to the TV set signal switching box (30), and wherein said signal sources (40) each include a function expansion module (41) having an external device interface (421),
**characterized in that**
each external device interface (421) is configured to receive an IR instruction so that data communication with a remote controller and the signal source (40) can be directly carried out so as to control an operation thereof.

2. The TV set signal switching box (30) according to claim 1, **characterized in that** the signal sources (40) have the same interface that is plugged to the TV set signal switching box (30).

3. The TV set signal switching box (30) according to claim 2, **characterized in that** the interface of the signal source (40) is one end of a golden finger connector.

4. The TV set signal switching box (30) according to claim 1, **characterized in that** the TV set signal switching box (30) is provided separately from the TV set and is connected to the TV set through a signal transmitting device for interactive communication.

5. The TV set signal switching box (30) according to claim 4, **characterized in that** the TV set comprises a TV set processing unit (20), and the signal transmitting device is connected to the TV set processing unit (20).

6. The TV set signal switching box (30) according to claim 1, **characterized in that** the TV set signal switching box (30) also comprises a processing unit (MCU) and an audio and video processing unit that is connected to and controlled by the processing unit (MCU).

7. The TV set signal switching box (30) according to claim 6, **characterized in that** the audio and video processing unit controls the signal sources (40) to carry out an audio and video signal transmission with the TV set.

8. The TV set signal switching box (30) according to claim 6 or 7, **characterized in that** the processing unit (MCU) is connected to the signal sources (40) and transmits a detection signal, a control signal and a communication signal to the signal sources (40).

## Patentansprüche

1. Fernsehgerät-Signalschaltkasten (30), der zwischen einem Fernsehgerät und Signalquellen (40) geschaltet ist, um zu ermöglichen, dass die Signalquellen (40) Datenträgersignale mit dem Fernsehgerät kommunizieren, wobei der Schaltkasten (30) eine erste Schnittstelle, eine zweite Schnittstelle und eine Verarbeitungseinheit (MCU) umfasst,
wobei die erste Schnittstelle elektrisch mit dem Fernsehgerät verbunden ist und interaktiv mit diesem kommuniziert,
wobei die zweite Schnittstelle elektrisch mit einer Mehrzahl an Signalquellen (40) verbunden ist, die Signalquellen (40) durch Ausgeben eines Energieversorgungssignals mit Energie versorgt und ein Steuersignal an die Signalquellen (40) ausgibt,
und
wobei die Verarbeitungseinheit (MCU) ein Energieversorgungssignal von dem Fernsehgerät empfängt und dadurch eingeschaltet wird, das Verarbeitungseinheits-Energieversorgungssignal eingibt, das Energieversorgungssignal zu den Signalquellen (40) steuert und die Signalquellenvorrichtung (40) ermittelt, mit dem Fernsehgerät interaktiv kommuniziert, eine Signalquelle (40) bestimmt, die betrieben werden soll, und die Signalquelle (40) einschaltet, und wobei die Signalquelle (40) ein Audio- und ein Videosignal zu dem Fernsehgerät ausgibt,
wobei die Signalquellen (40) in Form von Erweiterungskarten ausgebildet sind und lösbar mit dem Fernsehgerät-Signalschaltkasten (30) verbunden sind, und wobei jede der Signalquellen (40) ein Funktionserweiterungsmodul (41) umfasst, das eine externe Geräteschnittstelle (421) aufweist,
**dadurch gekennzeichnet, dass**
jede externe Geräteschnittstelle (421) derart ausgestaltet ist, dass sie einen IR-Befehl empfängt, so dass die Datenkommunikation zwischen einer Fernbedienung und der Signalquelle (40) direkt ausgeführt werden kann, um deren Betrieb zu steuern.

2. Fernsehgerät-Signalschaltkasten (30) nach Anspruch 1, **dadurch gekennzeichnet, dass** die Signalquellen (40) dieselbe Schnittstelle aufweisen, die mit dem Fernsehgerät-Signalschaltkasten (30) verbunden ist.

3. Fernsehgerät-Signalschaltkasten (30) nach Anspruch 2, **dadurch gekennzeichnet, dass** die Schnittstelle der Signalquelle (40) ein Ende eines goldenen Fingerverbinders ist.

4. Fernsehgerät-Signalschaltkasten (30) nach Anspruch 1, **dadurch gekennzeichnet, dass** der Fernsehgerät-Signalschaltkasten (30) separat von dem Fernsehgerät vorgesehen ist und mit dem Fernsehgerät über eine signalübertragende Vorrichtung zur interaktiven Kommunikation verbunden ist.

5. Fernsehgerät-Signalschaltkasten (30) nach Anspruch 4, **dadurch gekennzeichnet, dass** das Fernsehgerät eine Fernsehgerät-Verarbeitungseinheit (20) umfasst, und die signalübertragende Vorrichtung mit der Fernsehgerät-Verarbeitungseinheit (20) verbunden ist.

6. Fernsehgerät-Signalschaltkasten (30) nach Anspruch 1, **dadurch gekennzeichnet, dass** der Fernsehgerät-Signalschaltkasten (30) weiterhin eine Verarbeitungseinheit (MCU) und eine Audio- und Videoverarbeitungseinheit umfasst, die mit der Verarbeitungseinheit (MCU) verbunden ist und durch diese gesteuert ist.

7. Fernsehgerät-Signalschaltkasten (30) nach Anspruch 6, **dadurch gekennzeichnet, dass** die Audio- und Videoverarbeitungseinheit die Signalquellen (40) steuert, um eine Audio- und Videosignalübertragung mit dem Fernsehgerät durchzuführen.

8. Fernsehgerät-Signalschaltkasten (30) nach Anspruch 6 oder 7, **dadurch gekennzeichnet, dass** die Verarbeitungseinheit (MCU) mit den Signalquellen (40) verbunden ist und ein Erkennungssignal, ein Steuersignal und ein Kommunikationssignal an die Signalquellen (40) übermittelt.

## Revendications

1. Boîtier de commutation de signaux de téléviseur (30), connecté entre un téléviseur et des sources de signaux (40) pour permettre aux sources de signaux (40) de faire interagir des signaux de média avec le téléviseur,
ledit boîtier de commutation (30) comprend une première interface, une seconde interface et une unité de traitement (MCU),
ladite première interface est électriquement connectée au téléviseur et communique avec celui-ci de manière interactive,
ladite seconde interface est électriquement connectée à une pluralité de sources de signaux (40), alimente les sources de signaux (40) en courant en délivrant en sortie un signal d'alimentation en courant, et délivre en sortie un signal de commande aux sources de signaux (40), et
ladite unité de traitement (MCU) reçoit un signal d'alimentation en courant du téléviseur en étant ainsi activée, délivre en entrée le signal d'alimentation en courant de l'unité de traitement, commande le signal d'alimentation en courant jusqu'aux sources de signaux (40) et détecte le dispositif de source de signaux (40), communique avec le téléviseur de manière interactive, détermine une source de signaux (40) qui a besoin de fonctionner et active la source de signaux (40) pour la faire fonctionner, et la source de signaux (40) délivre en sortie un signal audio et vidéo au téléviseur,
dans lequel lesdites sources de signaux (40) sont sous la forme de cartes d'extension et sont connectées de manière détachable au boîtier de commutation de signaux de téléviseur (30), et dans lequel lesdites sources de signaux (40) incluent chacune un module d'extension de fonction (41) ayant une interface de dispositif externe (421),
**caractérisé en ce que**
chaque interface de dispositif externe (421) est configurée pour recevoir une instruction IR de sorte qu'une communication de données avec un contrôleur distant et la source de signaux (40) peut être directement réalisée de manière à commander un fonctionnement de ceux-ci.

2. Boîtier de commutation de signaux de téléviseur (30) selon la revendication 1, **caractérisé en ce que** les sources de signaux (40) ont la même interface qui est enfichée dans le boîtier de communication de signaux de téléviseur (30).

3. Boîtier de commutation de signaux de téléviseur (30) selon la revendication 2, **caractérisé en ce que** l'interface de la source de signaux (40) est une extrémité d'un connecteur à doigts dorés.

4. Boîtier de commutation de signaux de téléviseur (30) selon la revendication 1, **caractérisé en ce que** le boîtier de commutation de signaux de téléviseur (30) est fourni séparément du téléviseur et est connecté au téléviseur par l'intermédiaire d'un dispositif de transmission de signaux en vue d'une communication interactive.

5. Boîtier de commutation de signaux de téléviseur (30) selon la revendication 4, **caractérisé en ce que** le téléviseur comprend une unité de traitement de téléviseur (20), et le dispositif de transmission de signaux est connecté à l'unité de traitement de téléviseur (20).

6. Boîtier de commutation de signaux de téléviseur (30) selon la revendication 1, **caractérisé en ce que** le boîtier de commutation de signaux de téléviseur (30) comprend également une unité de traitement (MCU) et une unité de traitement audio et vidéo qui est connectée à l'unité de traitement (MCU) et commandée par celle-ci.

7. Boîtier de commutation de signaux de téléviseur (30) selon la revendication 6, **caractérisé en ce que** l'unité de traitement audio et vidéo commande les sources de signaux (40) pour réaliser une transmission de signaux audio et vidéo avec le téléviseur.

8. Boîtier de commutation de signaux de téléviseur (30) selon la revendication 6 ou 7, **caractérisé en ce que** l'unité de traitement (MCU) est connectée aux sources de signaux (40) et transmet un signal de détection, un signal de commande et un signal de communication aux sources de signaux (40).
